# EUROPEAN PATENT APPLICATION

(11) **EP 4 810 993 A1**
(43) Date of publication of application: **23.09.2026**
(21) Application number: 26164814.1
(22) Date of filing: 13.03.2026
(51) Int. Cl.: G01S 13/04, G01S 13/88, F16P 3/14

(54) **METHOD AND SYSTEM FOR MANAGING BY RADAR SECURE ACCESS TO A HAZARDOUS ENVIRONMENT WITH RESTRICTED ACCESS**

(30) Priority: 18.03.2025 IT 202500005493
(71) Applicant: Inxpect S.p.A., 25131 Brescia (BS) (IT)
(72) Inventor: Muzaka, Alban, 25131 Brescia BS (IT)
(74) Representative: Perani & Partners S.p.A.

(57) **Abstract**

In a method for managing secure access to a hazardous environment with restricted access (200), a radar system (110) detects moving targets in three regions (112a, 112b, 112c) in sequence in a corridor (400) that connects the hazardous environment (200) and an external environment (300). Starting from the detection of a self-driven load transport vehicle (500) in the first region (112a), in a start phase, an alarm signal for the hazardous environment (200), which can deactivate a hazardous device (210), is triggered in case of moving targets in the third region (112c), but not in the first and second regions (112a, 112b). When the vehicle (500) is entirely in the second region (112b), the vehicle (500) is requested to stop, and the absence of humans in the corridor (400) is verified. In an arrival phase, the vehicle (500) is authorized to cross the third region without triggering the alarm signal.

## Description

### Technical field

The present invention is developed in the technical field of safety in automated work environments with dangers for humans.

### State of the art

In industrial production or processing sites, as well as in the logistics field, the presence of automated devices, such as, for example, robotic machinery or automated vehicles, is common, thus with automatically moving parts, which are potentially hazardous for a person who is too close.

Where the danger to a human being is considered significant, it is common to segregate one or more hazardous devices in an environment with restricted access. Therefore, a physical barrier is arranged to obstruct personnel access to the device while it is in operation. Should a person nevertheless need to enter the hazardous environment, their safety may require deactivating the hazardous device, with losses in production time and increased costs.

With a view to maximum automation and limitation of system downtime, load transport operations to the hazardous environment and from there to the external environment, for example to bring loads to be processed to a hazardous device, and to bring out processed loads, are often delegated to autonomous vehicles, such as AGVs (automated guided vehicles) and AMRs (autonomous mobile robots).

The use of photoelectric barriers at the entrance of hazardous environments is known. When such barriers detect the passage of an unauthorized target, an alarm signal is issued, which can be used to automatically deactivate one or more hazardous devices in the environment with restricted access.

Instead, by authorizing the passage of an autonomous vehicle, the photoelectric barrier can be temporarily deactivated to let the vehicle in or out, without issuing the alarm as it is assumed that this does not entail risks for humans.

However, the risk remains that, while the photoelectric barrier is deactivated for the passage of the vehicle, a person may also enter the hazardous environment, without triggering alarms and therefore without deactivating the hazardous devices.

The prior art document EP 3885635 deals with the transport of loads to a hazardous machine by means of a conveyor belt. To prevent the entry of humans together with the loads, when a photoelectric barrier is deactivated, the document proposes the introduction of an antechamber. Thus, the photoelectric barriers become two, and between them a detection area is arranged by means of radars that are able to distinguish authorized targets from unauthorized targets. In particular, the distinction is made on the basis of the fact that the conveyor belt is stopped, and it is verified that no animate targets are present.

When the transit of an incoming target is expected, the conveyor belt brings the target into the antechamber while the alarm for the external barrier is kept deactivated. When the target is in the antechamber, the external barrier is reactivated and it is verified that no unauthorized targets are present in the antechamber. If this is the case, the internal barrier is deactivated and the belt can bring the target to its destination.

### Problem of the prior art

As commented, the known systems based on a single photoelectric barrier are still subject to safety risks.

The system of EP 3885635, although secure, requires a relatively complex installation, due to the fact that two photoelectric barriers and at least one radar are required. Furthermore, its functionality is limited by the fact that it is necessary for an operator to deposit the load on the conveyor belt and request its activation. This often also requires the operator to be close to the photoelectric barrier when the conveyor belt is activated, with a certain possibility that the operator may interfere with the external photoelectric cell before or after the start of the conveyor belt, potentially leading to safety alarms.

### Summary of the invention

The object of the present invention is to solve the problems of the known art mentioned above, making the transport of loads to a hazardous environment secure, by means of a system that is simpler to install and even less dependent on human intervention.

These and other objects are achieved by a method and a system for managing secure access to a hazardous environment with restricted access, and by a system for accessing a hazardous environment with restricted access, according to any of the appended claims.

According to the invention, a single radar system detects moving targets in three distinct detection regions in a corridor for access to the hazardous environment, including a first and a third region which occupy opposite access areas of the corridor, and a second region between the first and the third region.

An alarm signal, which can for example deactivate hazardous devices in the environment with restricted access, is generated as a function of communications that occur with an autonomous vehicle that must cross the corridor, and of the detection of targets by the radar system in the first, second and third region.

In particular, when the moving vehicle is detected in the first region, in a start phase and in a verification phase, subsequent to the start phase, the detection of a moving target in the third region triggers the alarm signal.

Instead, in the start phase, the detection of moving targets in the first and second region does not trigger the alarm signal, until a predetermined intermediate condition is reached, in which the vehicle is entirely in the second region.

In the verification phase, starting from the intermediate condition, the vehicle is requested to stop, and while the vehicle is stopped it is verified whether a predetermined safety condition is met, identified by a combination of target detections in the first, second and third region indicative of the absence of humans in the corridor.

In an arrival phase, subsequent to the verification phase, starting from the safety condition, an authorization to cross the third region is communicated and the detection of moving targets in the second and third region does not trigger the alarm signal.

Advantageously, a combination of radars and photoelectric cells is not necessary to guarantee the safety of the system. In a known manner, a radar can simultaneously monitor multiple areas, and the target detections in these two areas can be used as distinct inputs for a control logic. Therefore, in optimal conditions a single radar device can monitor the entire corridor and guarantee safety.

In the case of larger corridors, or vehicles that can project shadow zones for the signal of a single radar device, the radar system can include a greater number of radar devices for greater safety and coverage, but already two radar devices can provide good coverage in most cases, for example by dividing the second region between them and operating in addition one of the two on the first region and the other on the third region.

In addition, the operation of the system is completely independent of the presence of a conveyor belt, and therefore of a person assisting with the loading of the load on the belt. Instead, an autonomous vehicle such as an AGV or AMR can reach the corridor already loaded, manage the authorizations to pass in an autonomous way, and then bring the load where desired in the hazardous environment. The entire system can therefore be managed without proximity or significant human supervision.

Further features and advantages of the invention will be recognizable by a person skilled in the art from the following detailed description of exemplary embodiments of the invention.

### Brief description of the figures

For a better understanding of the subsequent detailed description, some embodiments of the invention are illustrated in the accompanying drawings, in which:
- figure 1 shows a system for managing secure access to a hazardous environment with limited access according to an embodiment of the invention, before starting a transit sequence,
- figure 2 shows the system of figure 1, during an entry phase of a self-driven vehicle into a first detection region,
- figures 3 show the system of figure 1, during a safety verification phase, in the transit of two distinct self-driven vehicles, and
- figure 5 shows the system of figure 1, during the transit of a self-driven vehicle in a reverse direction.

### DETAILED DESCRIPTION

An object of the invention is a system 100 for managing secure access to a hazardous environment with restricted access 200.

The environment with restricted access 200, or hazardous environment 200, contains one or more automated hazardous devices 210. These may include, for example, robots with moving parts, mechanical processing machinery, autonomous vehicles that are considered hazardous, or other hazardous devices of a known type. A preferred example of a hazardous device 210 is a palletizer.

Generally, each hazardous device 210 is capable of being deactivated to stop or otherwise interrupt a type of operation hazardous for a nearby human, thus restoring a safe condition with the deactivation.

Each hazardous device 210 comprises or is in signal communication with one or more control units that can perform various automatic operation tasks. The control unit of interest is able at least to command the deactivation of the hazardous device 210. This control unit can be common to multiple hazardous devices 210, or dedicated to a single hazardous device 210.

In the preferred embodiments, the control unit is adapted, at least at the software level, to receive and execute particular commands specific for the invention, and can be considered part of the system 100 of the invention.

The system 100 operates between the environment with restricted access 200 and an external environment 300, in which the presence of humans may be permitted, without safety risks that require altering the operation of the hazardous devices 210 in the environment with restricted access 200.

By external environment 300 is meant here an environment distinct from the hazardous environment 200, which however can be located indifferently inside a building or outside it.

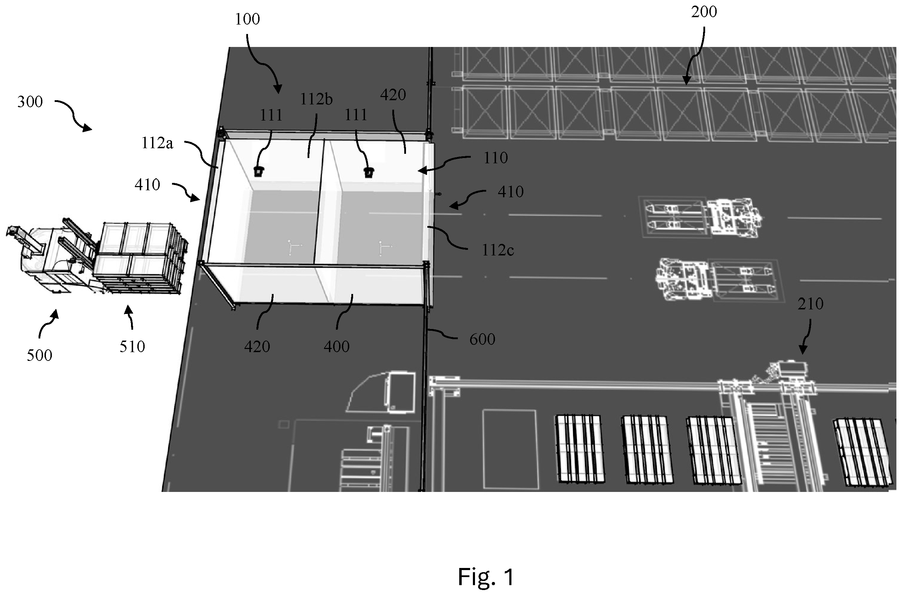

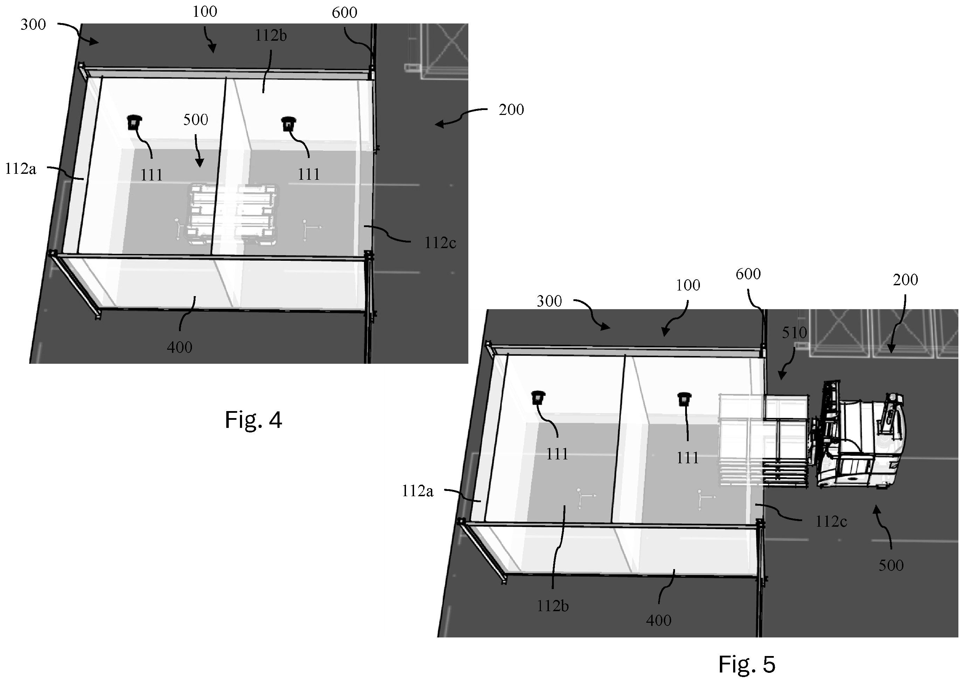

As detailed below, access to the hazardous environment 200 can be allowed to self-driven load transport vehicles 500, such as for example an AGV (figures 1-3 and 5, illustrated with a load 510) or an AMR (figure 4, illustrated without a load 510). Access to the hazardous environment 200 is not necessarily precluded to humans, but when a human accesses it, it is provided that predetermined safety measures are triggered, such as the deactivation of one or more hazardous devices 210 by the control unit, which makes frequent entry by humans undesirable.

The vehicles 500 that are not considered particularly hazardous can circulate freely also in the external environment 300, even in the presence of humans. The vehicles 500 are configured for the transport of predetermined loads 510 entering and/or exiting the hazardous environment 200, for example pallets on which are loaded packages of predetermined products, or pieces to be worked.

The vehicles 500 can also be adapted at a software level to manage certain communications required by the invention, and can be considered part of the system 100.

The hazardous environment 200 and the external environment 300 are usually separated from each other by a barrier 600, for example a fence surrounding the hazardous environment 200, or a wall of a room.

The system 100 comprises a corridor 400 that connects the hazardous environment 200 and the external environment 300, creating a passage through the barrier 600, if provided (for example, the hazardous and external environments 200, 300 can be connected to each other by the corridor 400 without being contiguous, and therefore without being divided from each other by a barrier 600). The corridor 400 has two openings at respective, opposite access areas 410, which communicate with the hazardous environment 200 and with the external environment 300. Thus, one of the access areas 410 is proximal to the hazardous environment 200 while the other access area 410 is proximal to the external environment 300.

It should be noted that in a known manner the corridor 400 is laterally delimited by two side walls 420, each of which connects the two access areas 410. Preferably, the side walls 420 do not have other openings crossable by a human.

The system 100 then comprises a control system for managing secure access to the hazardous environment with restricted access 200. The control system can be commercialized independently of potentially pre-existing components of the system 100, such as the control unit of a hazardous device 210, the corridor 400 and the vehicles 500. The control system therefore constitutes an independent object of the invention. The control system also allows for performing a method for managing secure access to a hazardous environment with restricted access 200, which is also an independent object of the invention. From the following detailed description of the control system, a person skilled in the art will easily recognize also the steps of the method.

The control system comprises a radar system 110, which comprises one or more radar devices 111, independent or interdependent to each other.

The radar system 110 is configured to detect moving targets in three distinct detection regions 112a, 112b, 112c, namely a first region 112a, a second region 112b and a third region 112c.

In one embodiment, the radar system 110 comprises a single radar device 111, which is configured to detect targets in all three regions 112a, 112b, 112c. The radar device 111 for example can be positioned on a support above a central area of the corridor 400, in particular a gantry support. This embodiment simplifies the system 100 and its installation to the maximum, but, in particular cases of dimensions and shapes of the corridor 400, of the vehicles 500 and of the transported loads 510, signal shadow zones could be created where a possible target would not be detected. For example, an AGV usually creates larger shadow zones than an AMR.

For this reason, it may be useful to increase the number of radar devices 111 of the radar system 110. The different radar devices 111 can in fact be arranged so that the shadow zones for the signal of a radar device 111 are monitored by a distinct radar device 111.

In some embodiments, multiple radar devices 111 monitor, each, all three detection regions 112a, 112b, 112c, from respective distinct observation points. The visual fields of the different radar devices 112a, 112b, 112c are therefore for the most part overlapping. Advantageously, a redundancy is obtained that reduces the risk of targets going unnoticed.

In other embodiments, distinct radar devices 111 can monitor distinct regions 112a, 112b, 112c or parts of regions 112a, 112b, 112c that are at least partially distinct. For example, in one embodiment, the radar system 110 comprises distinct radar devices 111 to monitor each of the three regions 112a, 112b, 112c. Thus, the position and the visual field of each radar device 111 can be optimized to minimize the shadow zones in the respective monitored region 112a, 112b, 112c.

In yet another embodiment, one or more of the regions 112a, 112b, 112c can be divided into sub-regions monitored by distinct radar devices 111, for example the second region 112b which is usually the largest.

An embodiment that reduces the risk of shadow zones and at the same time uses a limited number of radar devices 111, simplifying the installation, provides that a first radar device 111 detects targets in the first region 112a and in a portion of the second region 112b adjacent to the first region 112a (for example, at least one half of the second region 112b), and a second radar device 111 detects targets in the third region 112c and in another portion of the second region 112b adjacent to the third region 112c (for example, at least one half of the second region 112b). These radar devices 111 can be positioned for example at the two access areas 410 of the corridor 400.

In the presence of multiple radar devices 111, it is preferable that the respective regions or portions of regions 112a, 112b, 112c monitored are at least partially overlapping, to avoid the risk of unmonitored areas. A person skilled in the art will however be able to easily vary the shapes and dimensions of the areas monitored by the different radar devices 111 to adapt them to specific applications. In general, the use of radar devices 111 to monitor all three regions 112a, 112b, 112c has the advantage that at least one radar device 111 can monitor at the same time (portions of) distinct regions 112a, 112b, 112c, for example when a single radar device 111 detects targets in at least one portion of the second region 112b, and at the same time in at least one of the first and third regions 112a, 112c.

In a known manner, the radar system 110 comprises one or more controllers (not illustrated), for example a controller for each radar device 111 or a single controller for all radar devices 111. This allows processing the radar signals of each radar device 111 and identifying the targets in their visual field, for the functions described below.

Preferably, in ways known per se, the radar system 110 is configured to detect moving targets in the three regions 112a, 112b, 112c, and not to detect stationary targets therein. Alternatively, the radar system 110 can detect both moving targets and stationary targets, but must at least distinguish between them, so as to report these targets differently, or to report one type and ignore the other.

The radar system 110 is also configured to generate a status signal indicating the presence and absence of moving targets detected in each of the first, second, and third regions 112a, 112b, 112c. The status signal is preferably an assembly of three Boolean logic outputs (generally independent of each other), each of which indicates the presence or absence of moving targets in a respective region 112a, 112b, 112c. The status signal is instead insensitive to the presence or absence of fixed targets in the three regions 112a, 112b, 112c.

In the preferred embodiment, each radar device 111 is a volumetric radar device, configured to detect the position of targets in a three-dimensional spatial coordinate system, for example distance, azimuth angle (substantially horizontal) and elevation angle (substantially vertical).

Still in the preferred embodiment, each radar device 111 is configured to monitor detection regions 112a, 112b, 112c in the form of cuboids, i.e., parallelepipeds. Preferably, the radar device 111 is settable to adjust the dimensions of the detection regions 112a, 112b, 112c in the form of cuboids. Preferably, the radar device 111 is settable to monitor a first and a second type of detection areas 112a, 112b, 112c, where the first type (or barrier-shaped type) are detection areas 112a, 112c with a predetermined minimum thickness in one of three Cartesian coordinates, and the second type are detection areas 112b with adjustable dimensions in the three Cartesian coordinates, all three being greater than the predetermined minimum thickness.

In the illustrated embodiment, the first, second and third regions 112a, 112b, 112c can all be regions in the shape of parallelepipeds. In particular, the first and third regions 112a, 112c are illustrated of the first type, i.e., with a minimum thickness (in particular in the longitudinal direction X-X), while the second region 112b is illustrated of the second type.

In more detail, the first, second and third regions 112a, 112b, 112c are aligned with each other and contiguous along the longitudinal direction X-X. Thus, the second region 112b is arranged in the longitudinal direction X-X between the first and the third region 112a, 112c, and is contiguous to both. In particular, there are no free spaces between the second region 112b and the other two regions 112a, 112c. The second region 112b can partially interpenetrate the other two 112a, 112c, or can have with each of them a common surface, while in general there are no free spaces (i.e., not monitored) between the second region 112b and each of the other two regions 112a, 112c. It should be observed that the first and third regions 112a, 112c, even if they were to interpenetrate the second region 112b, are generally disjoint from each other.

The first, second and third regions 112a, 112b, 112c are located between the side walls 420 of the corridor 400. The first, second and third regions 112a, 112b, 112c occupy substantially all of a space between the side walls 112 in a width direction of the corridor 400.

Each of the regions 112a, 112b, 112c is therefore arranged in such a way as to be necessarily crossed by a target, in particular a human target, that travels the corridor from the external environment 300 to the environment with restricted access 200, or vice versa.

The first and third regions 112a, 112c are located in the two distinct access areas 410 of the corridor 400. As will be described later, the operating logic remains substantially the same for targets entering or exiting the area with restricted access 200. Therefore, even if in the figures the first region 112a is shown as the region proximal to the external environment 300, and the third region 112c as the region proximal to the hazardous environment 200, the two regions can also be swapped in position.

The first and third regions 112a, 112c can each occupy the access opening to the corridor 400 of the respective access area 410, or they can be arranged more upstream or more downstream of the opening, provided that they do not leave free passages for unmonitored targets.

The second region 112b, as already commented, is sized to be located in the corridor 400 between the first and the third region 112a, 112c, and therefore between the two access areas 410. In more detail, the dimensions of the second region 112b in the longitudinal direction X-X are sufficient to entirely contain a vehicle 500 with a predetermined load 510, without them invading at the same time either the first or the third region 112a, 112c.

Therefore, it is assumed that a target that travels the corridor 400 is detected at least temporarily as a moving target in the first, second and third regions 112a, 112b, 112c. If this target is a vehicle 500 with a load 510, at least temporarily it will be detected in the second region 112b without being detected in the first and third regions 112a, 112c.

The control system comprises a processing system (not illustrated), which may comprise an electronic controller or multiple electronic controllers in signal communication with each other.

The processing system comprises a communication system configured to communicate with the radar system 110 (specifically, with the one or more controllers of the radar system 110), and in particular to receive the status signal from the radar system 110. Furthermore, the communication system is configured to communicate with the autonomous vehicles 500, at least when they are in predetermined areas in the vicinity of the corridor 400. Furthermore, the communication system is configured to communicate with one or more control units of respective hazardous devices 210 in the hazardous environment 200.

The processing system is configured to execute a software that determines whether trigger conditions for an alarm signal for the hazardous environment 200 occur, and if positive, generates the alarm signal and preferably sends it to the one or more control units of the hazardous devices 210 in the hazardous environment 200.

In the preferred embodiment, upon receiving the alarm signal, the control unit is configured to deactivate the respective hazardous device 210.

In more detail, the processing system is configured to determine whether the trigger conditions of the alarm signal occur as a function of predetermined communications with the vehicle 500 and of the detection of targets in the first, second and third regions 112a, 112b, 112c.

The transit of a vehicle 500 in the corridor 400 without triggering the alarm is allowed only following compliance with a particular transit sequence in which a predetermined order of detections of presence or absence of targets in the detection regions 112a, 112b, 112c is respected, jointly with predetermined communications with the vehicle 500.

A direct transit sequence of the vehicle 500 is triggered by the detection of a vehicle 500 moving in the first region 112a, provided that an alarm signal has not already been triggered or more generally that targets are not detected in the first, second or third regions 112a, 112b, 112c already at the time of the first detection of the vehicle 500.

In some embodiments, the entry of the vehicle 500 must be preceded by the reception, in the processing system, of a request to transit in the corridor 400 from the vehicle 500 itself. The request comes from a vehicle 500 that is at the access area 410 of the corridor 400 where the first region 112a is also located (without having yet entered the first region 112a). The request can be transmitted for example by means of known wireless communication protocols.

If this request is provided, before the reception of the transit request, the detection of a target in at least one of the three regions 112a, 112b, 112c, for example the third region 112c, can trigger the alarm signal.

The transit of the vehicle 500, whether or not preceded by a request, occurs in a particular transit direction, i.e., an entry or exit direction from the hazardous area 200. Hereinafter, the case of transit from the side of the first region 112a will be described, which can therefore represent an entry transit, if the first region 112a is the furthest from the hazardous environment 200, or an exit transit in the case where it is the closest.

Preferably, the system manages in an analogous way, by swapping the roles of the first and third regions 112a, 112c, transits in the reverse direction (as in figure 5), i.e., from the side of the third region 112c, by a vehicle 500 that starts near the access area 410 of the corridor 400 where the third region 112c is also located.

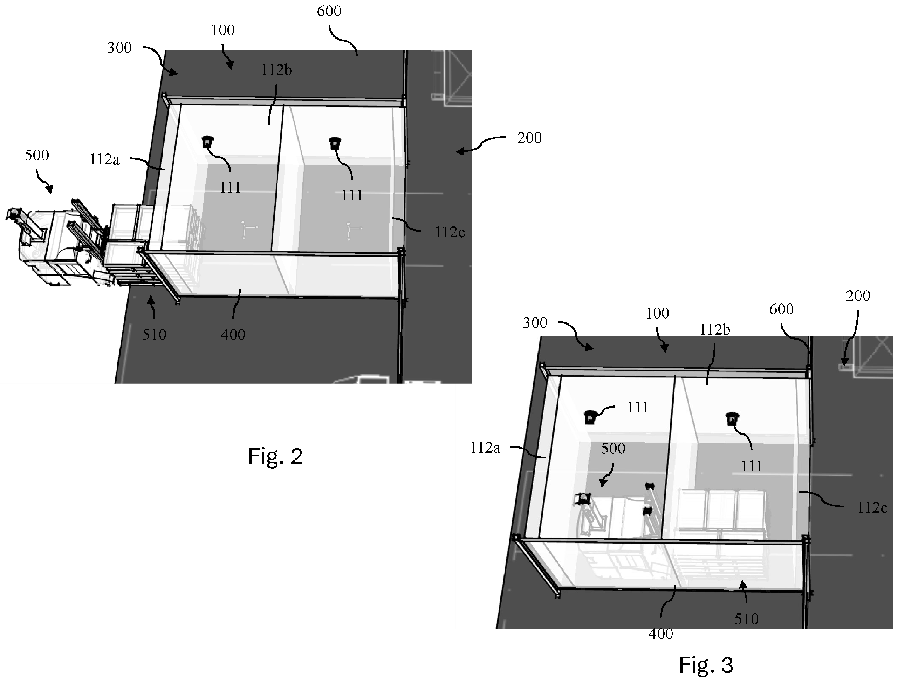

The transit sequence, once started, is divided into three parts, namely, in order, a start phase (figures 2 and 5, in two opposite transit directions), a verification phase (figures 3 and 4), and an arrival phase.

During the start and verification phases, as a safety measure it is provided that the detection of a moving target in the third region 112c triggers the alarm signal. In other words, in these phases, the processing system is configured to generate the alarm signal when the status signal contains an indication that a moving target is detected in the third region 112c.

The start and verification phases are in fact phases in which it is not expected that the vehicle 500 reaches the third detection region 112c, and therefore the presence of a moving target in that region 112c is potentially an unsafe condition in which an operator is entering the hazardous area 200 after having traveled the corridor 400, partially disarmed for the passage of the vehicle 500.

Preferably, once the alarm signal has been issued on the occasion already described or on other occasions commented on below, the transit sequence of the vehicle 500 is interrupted, and the deactivated hazardous device 210 cannot be reactivated automatically without confirmation, by an operator, that predetermined safety conditions have been restored.

However, since also in the safe transit sequence the vehicle 500 will have to reach the hazardous environment 200, and therefore cross the third region 112c, a moment must be provided in which the detection of a target in the third region 112c does not trigger the alarm signal. This moment is the arrival phase.

Therefore, during the arrival phase a different safety measure must be provided, which is not based on the third region 112c. In particular, in the arrival phase, the detection of a moving target in the first region 112a triggers the alarm signal. In other words, in this phase, the processing system is configured to trigger the alarm signal when the status signal contains an indication that a moving target is detected in the first region 112a.

In some embodiments, also in the verification phase the detection of a moving target in the first region 112a triggers the alarm signal. Alternatively, considering that in the verification phase another safety measure is already present (as a moving target in the third region 112c triggers the alarm signal), the detection of a moving target in the first region 112a in the verification phase can simply interrupt the transit sequence, and thus inhibit that the arrival phase is started and that the third region 112c is disarmed, without however already triggering the alarm signal upon detection of a target in the first region 112a in the verification phase.

In the verification and arrival phases it is in fact expected that the vehicle 500 has already completely passed the first detection region 112a, and therefore the presence of a moving target in that region 112a is potentially a condition in which an operator has followed the vehicle 500 into the corridor 400.

The central verification phase is designed to verify the achievement of a predetermined safety condition, which justifies the passage to the arrival phase, and therefore allows targets to cross the third region 112c without triggering the alarm. It is thus desired to exclude that a human is present in the second region 112b, who could have reached the second region 112b next to a load 510, or in substitution of a load 510 (in fact, the entry of a human into the first region 112a could trigger the transit sequence in the same way as the vehicle 500, unless recognized in subsequent phases).

The safety condition must therefore be a status signal condition indicative of the absence of humans in the corridor 400, i.e., in the three regions 112a, 112b, 112c.

During the start phase, the vehicle 500 is detected as a moving target in the first and second regions 112a, 112b (not necessarily at the same time). In this phase, the detection of moving targets in the first and second regions 112a, 112b does not trigger the alarm signal.

The start phase ends when the monitoring of the status signal results in the confirmation that a predetermined intermediate condition has been reached. In the preferred embodiment, the intermediate condition is a condition in which the presence of at least one moving target is detected in the second region 112b, and in which the absence of a moving target is detected in the first and third regions 112a, 112c. This corresponds to the fact that the vehicle 500 has completely crossed the first region 112a, and is now entirely in the second region 112b.

Once the intermediate condition is reached, the load 510 has passed the first region 112a, and therefore one can proceed to the verification phase. In fact, from this moment the normal transit sequence does not provide for the passage of a moving target in the first region 112a.

In the verification phase, starting from the intermediate condition, the processing system sends the vehicle 500 a request to stop, so that it remains stationary until the predetermined safety condition is reached. Thanks to the fact that the vehicle 500 remains stationary, it passes, in the second region 112b, from being a moving target to being a fixed target, which is not detected by the radar system 110, or is detected but ignored by it. In both cases, if the target hitherto detected was really a vehicle 500, without humans, the status signal passes from a level indicating the presence of moving targets in the second region 112b to a level indicating the absence of moving targets in the second region 112b.

Thus, the safety condition is a condition in which the absence of a moving target is detected in the first, second and third regions 112a, 112b, 112c. If instead, following the stop of the vehicle 500, the status signal remains for a first predetermined time in a condition in which it indicates the presence of a moving target in the second region 112b, the processing system inhibits the continuation of the sequence with the arrival phase, and/or triggers the alarm. In fact, a human could be present in the second region 112b.

This predetermined time generally corresponds to the time that is necessary for the radar system 110 to recognize that a moving target has stopped, and therefore to recognize the absence of moving targets.

It should be observed that instead the control system generally does not trigger the alarm signal for the detection of a moving target in the second region 112b before the vehicle 500 has stopped, and optionally until the lapse of the first predetermined time, if the radar system 110 does not immediately recognize the stop of the vehicle 500.

The achievement of the safety condition in itself indicates that, despite the presumed presence of a vehicle 500, nothing is moving in the three regions 112a, 112b, 112c, and therefore it is safe, as it is considered unlikely that a human can remain sufficiently still not to be detected as a moving target, and precisely at the moment of verification. However, for even greater safety, in an embodiment it can be provided that the safety condition is considered satisfied only in the case where the absence of a target is verified for at least a second predetermined time. Furthermore, particular elaborations of the radar signal are known that allow detecting movements representative of vital signs, and which can be used in the verification phase.

The safety condition is therefore identified by a condition of the status signal indicative of the absence of humans in the corridor 400. From this moment, if the sequence has not been interrupted by the entry of new moving targets in the first region 112a during the verification phase, it is justified to allow the start of the arrival phase and the crossing of the third region 112c by the vehicle 500.

In the arrival phase, starting from the safety condition, the processing system communicates an authorization to cross the third region 112c. As anticipated, in the arrival phase the processing system is configured not to trigger the alarm for the sole detection of a moving target in the third region 112c (as well as in the second region 112b), while it is configured to trigger the alarm for the detection of a moving target in the first region 112a.

In one embodiment, the authorization to cross the third region 112c is communicated to the vehicle 500, which can then restart and cross the third region 112c.

In an alternative embodiment, the authorization to cross the third region 112c is communicated to an unloading means outside the corridor 400, which is therefore free to pick up the load 510 from the vehicle 500 by operating through the third region 112c, for example by reaching the vehicle 500, and then clearing the third region 112c again, for example by exiting it.

In this latter embodiment, the vehicle 500 can also exit the corridor 400 through the third region 112c, unloaded, but it could also remain stationary in the corridor 400 despite the conclusion of the arrival phase. For example, the arrival phase can be concluded on input from the unloading means or from an operator, or simply by detecting the absence of a moving target in the third region 112c. Therefore, to allow the exit of the vehicle 500 it is possible to repeat the verification phase, and subsequently execute a conclusive phase, in which, starting from the safety condition, a control condition analogous to that of the start or arrival phase is repeated, during which the vehicle 500 can exit respectively through the first region 112a or the third region 112c without triggering the alarm.

As anticipated, in a specular way it is possible to elaborate a reverse transit sequence in the corridor 400, from the side of the third region 112c.

One thus has a start phase in the reverse direction, in which the detection of a moving target in the third and second regions 112b, 112c does not trigger the alarm signal, until the intermediate condition is reached.

In the start phase and in the verification phase in the reverse direction, the detection of a moving target in the first region 112a determines the triggering of the alarm signal. Finally, in an arrival phase in the reverse direction, the detection of a moving target in the second and first regions 112a, 112b does not trigger the alarm signal. Instead, in the arrival phase in the reverse direction the detection of a target in the third region 112c triggers the alarm signal. Similarly, in the verification phase in the reverse direction the detection of a target in the third region 112c can trigger the alarm signal, or can simply interrupt the sequence and prevent the reverse arrival phase from being started and the first region 112a from being disarmed.

Obviously, a person skilled in the art will be able to make numerous equivalent modifications to the variants described above, without thereby departing from the scope of protection defined by the appended claims.

## Claims

1. Method for managing secure access to a hazardous environment with restricted access (200), comprising:
- arranging a corridor (400) having two access areas (410) that communicate with the hazardous environment (200) and with an external environment (300),
- providing a radar system (110) configured to detect moving targets in three distinct detection regions (112a, 112b, 112c) in the corridor (400), including a first region (112a) and a third region (112c) which are located respectively in the two access areas (410), and a second region (112b) between the first and third regions (112b, 112c),
- monitoring, by a processing system, the occurrence of trigger conditions of an alarm signal for the hazardous environment (200) depending on the detection of targets by the radar system (110) in the first, second and third regions (112a, 112b, 112c), so that:
- starting from the detection of a self-driven load transport vehicle (500) moving in the first region (112a), in a start phase and in a verification phase, after the start phase, the detection of a moving target in the third region (112c) determines the triggering of the alarm signal,
- in the start phase, the detection of moving targets in the first and second regions (112a, 112b) does not trigger the alarm signal, until a predetermined intermediate condition is reached in which the vehicle (500) is entirely in the second region (112b),
- in the verification phase, starting from the intermediate condition, the vehicle (500) is requested to stop, and while the vehicle (500) is stopped, it is verified whether a predetermined safety condition is met, identified by a combination of target detections in the first, second and third regions (112a, 112b, 112c) indicative of the absence of humans in the corridor (400),
- in an arrival phase, starting from the safety condition, an authorization to cross the third region (112c) is communicated and the detection of moving targets in the second and third regions (112b, 112c) does not trigger the alarm signal.

2. Method according to Claim 1, wherein a single radar device (111) of the radar system (110) is configured to detect moving targets in at least a portion of the second region (112b) and in at least one of the first and third regions (112a, 112c).

3. Method according to Claim 1 or 2, wherein the radar system (110) comprises a single radar device (111) configured to detect moving targets in the first, second, and third regions (112a, 112b, 112c).

4. Method according to any one of Claims 1 to 3, wherein the authorization to cross the third region (112c) is communicated to the vehicle (500), which then restarts and crosses the third region (112c).

5. Method according to any one of Claims 1 to 3, wherein the authorization to cross the third region (112c) is communicated to an unloading vehicle outside the corridor (400), which then picks up a load (510) from the vehicle (500) through the third region (112c), and vacates the third region (112c) again.

6. Method according to any one of Claims 1 to 5, wherein:
- in the verification phase, the detection of a moving target in the first region (112a) inhibits the start of the arrival phase, and optionally determines the triggering of the alarm signal, and
- in the arrival phase, the detection of a moving target in the first region (112a) determines the triggering of the alarm signal.

7. Method according to any one of Claims 1 to 6, comprising, before the start phase, receiving a request to transit in the corridor (400) from the side of the first region (112a) by the vehicle (500), which is located at the relative access area (410) of the corridor (400).

8. Method according to any one of Claims 1 to 7, wherein, starting from the detection of a self-driven load transport vehicle (500) moving in the third region (112c), start, verification and arrival phases are performed in a reverse direction, whereby:
- in the start phase and in the verification phase in the reverse direction, the detection of a moving target in the first region (112a) determines the triggering of the alarm signal,
- in the start phase in the reverse direction, the detection of moving targets in the third and second regions (112b, 112c) does not trigger the alarm signal, until the intermediate condition is reached, and
- in the arrival phase in the reverse direction, the detection of moving targets in the second and first regions (112a, 112b) does not trigger the alarm signal.

9. Method according to any one of Claims 1 to 8, wherein the alarm signal, when triggered, causes one or more automated devices in the hazardous environment (200) to stop.

10. Control system for managing secure access to a hazardous environment (200) with limited access, comprising:
- a radar system (110), configured to detect moving targets in three distinct detection regions (112a, 112b, 112c) in an access corridor (400) to a hazardous environment (200), including a first region (112a) sized to be an access area (410) of the corridor (400), a third region (112c) sized to be located in another access area (410) of the corridor (400), and a second region (112b) between the first and third regions (112c), wherein the radar system (110) is further configured to generate a status signal indicating the presence and absence of moving targets detected in each of the first, second, and third regions (112a, 112b, 112c),
- a processing system, having a communication system for receiving the status signal from the radar system (110), for communicating with a self-driven load transport vehicle (500), and for communicating with a control unit of at least one automated hazardous device (210) in the hazardous environment (200),
wherein the processing system is configured to verify if trigger conditions occur for triggering an alarm signal for the hazardous environment (200), based on predetermined communications with the vehicle (500) and on target detection in the first, second and third regions (112a, 112b, 112c), and if positive to send the alarm signal to the control unit of the hazardous device (210), such that:
- starting from the detection of the moving vehicle (500) in the first region (112a), a start phase is initiated,
- in the start phase, and in a verification phase following the start phase, the detection of a moving target in the third region (112c) triggers the alarm signal,
- in the start phase, the status signal is monitored until a predetermined intermediate condition is reached, wherein the status signal is compatible with the presence of the vehicle (500) entirely in the second region (112b),
- in the verification phase, starting from the intermediate condition, a stop request is sent to the vehicle (500), and it is verified whether a predetermined safety condition is met, identified by a condition of the status signal indicative of the absence of humans in the corridor (400),
- in an arrival phase, after the verification phase, starting from the safety condition, an authorization to cross the third region (112c) is sent and the detection of moving targets in the second and third region (112b, 112c) does not trigger the alarm signal.

11. System (100) for access to a hazardous environment with limited access (200), comprising:
- a control unit of at least one automated hazardous device (210) in a hazardous environment (200),
- a corridor (400) having two access areas (410) communicating with the hazardous environment (200) and with an external environment (300),
- one or more self-driven load transport vehicles (500), and
- the control system of Claim 10.
